# EUROPÄISCHE PATENTANMELDUNG

(11) **EP 0 763 939 A2**
(43) Veröffentlichungstag der Anmeldung: **19.03.1997**
(21) Anmeldenummer: 96113286.7
(22) Anmeldetag: 20.08.1996
(51) Int. Cl.: H04N 7/14

(54) **Videotelephoneinrichtung**

(30) Priorität: 16.09.1995 DE 19534450
(71) Anmelder: Alcatel SEL Aktiengesellschaft, D-70435 Stuttgart (DE)
(72) Erfinder: Bergler, Frank, 75223 Niefern (DE); Käuffert, Uwe, 75180 Pforzheim (DE)
(74) Vertreter: Knecht, Ulrich Karl, Dipl.-Ing.

(57) **Zusammenfassung**

Schaffung einer Videotelephoneinrichtung, die sich aus einfachen Mitteln zusammensetzen läßt und an jedem Ort leicht zu installieren ist.

Eine Videotelephoneinrichtung setzt sich aus einem Datenverarbeitungsgerät (PC), einer Video/Audio Aufnahmeeinrichtung (CAM) und einer PCMCIA-Karte (CC) zusammen. Über die PCMCIA-Karte erfolgt die Video/Audio-Datenkompression und die Übertragung über ein Telekommunikationsnetz (ISDN, GSM) zu weiteren Teilnehmern.

## Beschreibung

Die Erfindung betrifft eine Videotelephoneinrichtung zum Senden von Video/Audio-Signalen und zum Empfangen von Video/Audio-Signalen.

Ein aus dem Stand der Technik bekanntes Videotelephon besteht aus einem integrierten Apparat, bei dem sowohl Monitor als auch Kamera als auch Telephonteil integriert in einem versenkbaren Tischapparat sind. Hierbei befindet sich eine Kamera zur Aufnahme eines Bildsignals hinter einem halbdurchlässigen Spiegel des Monitors. Ein empfangenes Bild wird über einen Schirm auf den Spiegel ausgegeben und somit umgelenkt dem Videotelephonbenutzer zugeführt ("Telefonieren von Angesicht zu Angesicht"; Kommunikationstechnik von SEL; SEL Alcatel Gruppe; Seite 1 bis 8).

Weiterhin ist aus dem Stand der Technik bekannt einen PC als Endgerät für die Videokommunikation zu verwenden. Da der Personal Computer aus dem modernen Büro nicht mehr wegzudenken ist, kann er neben der Nutzung für eine herkömmliche Datenverarbeitung z. B. auch für eine Videokommunikation eingesetzt werden. Ein solches System wird dergestalt verwendet, daß **auf** einem herkömmlichen PC eine zusätzliche Kamera positioniert wird, die einen Videotelephonbenutzer aufnimmt. Ein solcherart aufgenommenes Bild des Benutzers wird unter Verwendung einer zusätzlichen Einsteckkarte in dem PC, beispielsweise auf ein herkömmliches Telekommunikationsnetz gegeben und zu einem weiteren Videotelephonteilnehmer übertragen. Neben einer solchen Personenkamera kann natürlich auch eine Dokumentenkamera zur Übertragung von Dokumenten eingesetzt werden ("Der PC als Endgerät für die Videokommunikation"; Telekom-Endgeräte; von: Blitz, A., Littmann, J.; Niemeier, H.; aus: NTZ Nachrichten Technische Zeitschrift 44 (1991) Juni; No. 6, Berlin, DE).

Der Erfindung liegt die Aufgabe zugrunde eine Videotelephonvorrichtung zu schaffen, die mit einfachen Mitteln an einer Vielzahl von Orten eingerichtet werden kann.

Desweiteren liegt der Erfindung die Aufgabe zugrunde eine solche PCMCIA-Karte zu schaffen die in der Lage ist mit einfachen Mitteln eine Videotelephoneinrichtung einzurichten.

Dies wird erfindungsgemäß gelöst durch die Lehre des Patentanspruchs 1 und durch die Lehre des Patentanspruchs 5.

Vorteilhaft ist hierbei, daß jedermann, der ein Datenverarbeitungsendgerät sowohl im Büro als auch zu Hause zur Verfügung hat, mit diesem Mittel und weiteren einfachen Mitteln ein Videotelephon herstellen kann. Dazu sind keine neuen Schnittstellen an einer Datenverarbeitungseinrichtung zu schaffen, vielmehr können bereits vorhandene Schnittstellen, wie dies z. B. die PCMCIA-Schnittstelle ist dazu verwendet werden wiederum herkömmliche Video/Audio-Aufnahmeeinrichtungen zusammen mit der Datenverarbeitungseinrichtung zu einer Videotelephoneinrichtung zu verbinden. Angepaßt an die neuen Formen der Übertragung sollte es auch möglich sein, eine Übertragung über ein Mobilfunknetz stattfinden zu lassen.

Weitere vorteilhafte Ausgestaltungen sind den Patentansprüchen 2 bis 4 zu entnehmen.

Gemäß Patentanspruch 4 ist es vorteilhaft eine zusätzliche Spannungsversorgung für die PCMCIA-Karte vorzusehen, wenn diese einen erhöhten Strombedarf aufweist.

Im Folgenden wird anhand der Figuren die Erfindung näher erläutert.

Folgende Figuren zeigen:
- Fig. 1a: eine erfindungsgemäße Videotelephoneinrichtung,
- Fig. 1b: eine weitere Ausgestaltung der erfindungsgemäßen Videotelephoneinrichtung,
- Fig. 2: schematische Darstellung der Datenschnittstelle mit einem Adapter,
- Fig. 3: schematische Darstellung einer Zwischeneinrichtung zum Einstecken gemäß Patentanspruch 4.

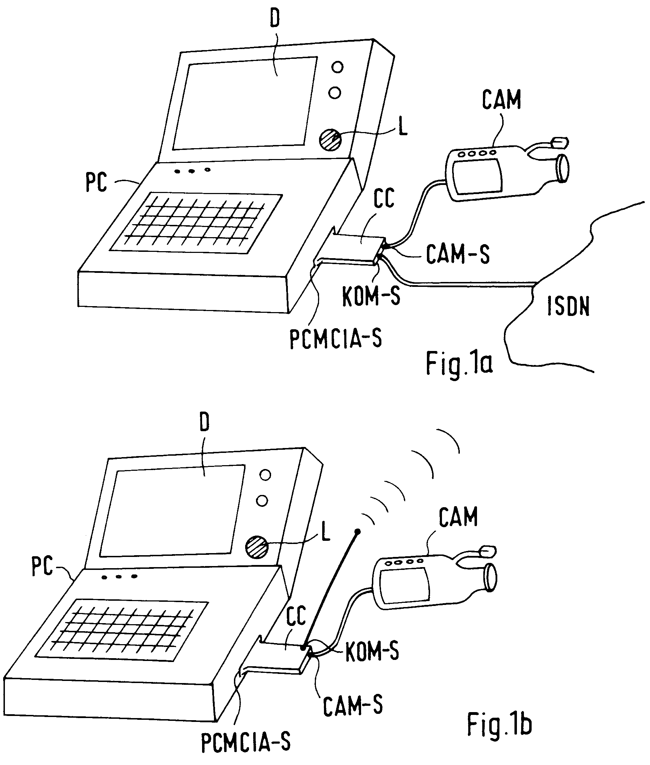

Im Folgenden wird die Erfindung anhand der Figuren 1a und 1b eingehender erläutert.

Die erfindungsgemäße Videotelephoneinrichtung besteht aus einer Datenverarbeitungsvorrichtung PC. Als Datenverarbeitungsvorrichtung PC kann hierbei beispielsweise ein herkömmlicher Personal Computer oder eine Workstation eines Großrechners oder aber ein Laptop oder aber ein sogenannter PDA, ein Personal Digital Assistant, verstanden werden. Die Datenverarbeitungsvorrichtung PC weist eine Video/Audio Wiedergabevorrichtung D, L auf. Diese Video/Audio Wiedergabevorrichtung besteht beispielsweise aus einem herkömmlichen Display als Videowiedergabeeinrichtung und aus einem herkömmlicher Lautsprecher als Audiowiedergabeeinrichtung. Desweiteren weist die Datenverarbeitungsvorrichtung PC eine PCMCIA-Schnittstelle PCMCIA-S auf. PCMCIA steht hierbei für die Personal Computer Memory Card International Association. Anstelle der PCMCIA-Schnittstelle kann aber auch eine Datenschnittstelle, wie z. B. eine V.24 Datenschnittstelle oder eine Druckerschnittstelle vorgesehen sein. Eine solche Datenschnittstelle ist üblicherweise auch an allen Modellen und auch an älteren Modellen von Datenverarbeitungsvorrichtungen vorgesehen. Desweiteren muß dazu die Datenverarbeitungsvorrichtung PC einen Adapter zur Nachbildung einer PCMCIA-Schnittstelle aufweisen.

Die Videotelephoneinrichtung besteht desweiteren aus einer PCMCIA-Karte CC auf welcher eine weitere Schnittstelle CAM-S zum Anschluß einer Video/Audio Aufnahmevorrichtung CAM vorhanden ist. Ebenso ist eine Kommunikationsschnittstelle KOM-S zum Anschluß an ein Kommunikationsnetz ISDN, GSM auf der Karte vorgesehen. Diese dient dazu eine Verbindung zu einem Kommunikationsnetz ISDN, GSM herzustellen zum Senden und zum Empfangen von Video/Audio-Signalen. Die Videotelephoneinrichtung besteht desweiteren aus der Video/Audio Aufnahmevorrichtung CAM. Dies kann beispielsweise eine Spezialkamera sein oder eine herkömmliche Kamera wie z. B. ein Camcorder.

Gemäß Fig. 1a ist eine Videotelephoneinrichtung dargestellt, bei der eine drahtgebundene Verbindung zu einem ISDN-Netz hergestellt ist. Wahlweise können natürlich Verbindungen zu anderen Kommunikationsnetzen, wie z. B. dem Breitband ISDN-Netz (B-ISDN) oder anderen breitbandigen oder schmalbandigen digitalen Netzen oder auch analogen Netzen hergestellt werden.

Gemäß Fig. 1b ist eine Videotelephoneinrichtung dargestellt, bei der mittels der Kommunikationsschnittstelle KOM-S zum Anschluß an ein Kommunikationsnetz eine drahtlose Verbindung zu einem Mobilfunknetz, z. B. dem GSM-Netz hergestellt wird. Weiter ist aber auch jedes andere Netz möglich wie z. B. das DECT-Netz.

Im Folgenden soll kurz skizziert werden (ohne Zeichnung), wie eine Verwendung der beanspruchten Videotelephoneinrichtung aussehen könnte. Ein Teilnehmer A befindet sich beispielsweise in seinem Geschäftsbüro am Ort I. Er wünscht eine Videotelephonkonferenz mit einem Teilnehmer B an einem Ort II aufzubauen. Am Arbeitsplatz des Teilnehmers A befindet sich ein Personal Computer. Dieser ist mit einer PCMCIA-Schnittstelle ausgestattet. Desweiteren besitzten sowohl Teilnehmer A als auch Teilnehmer B eine Kamera die über eine Anschlußleitung mit einer PCMCIA-Karte verbunden ist. An der Karte befindet sich desweiteren eine Anschlußmöglichkeit um eine Verbindung zu einem Telekommunikationsnetz herzustellen. Da der Teilnehmer A, wie bereits zuvor erwähnt eine Verbindung zu einem Teilnehmer B herzustellen wünscht, führt er die PCMCIA-Karte in den Personal Computer ein. Mittels der Tastatur des Personal Computers stellt der Teilnehmer A eine Verbindung zu dem Teilnehmer B her. Dieser antwortet auf den Ruf und bringt seine Videotelephoneinrichtung am Ort II ebenfalls in Bereitschaft. Nachdem beide Videotelephoneinrichtungen am Ort I und am Ort II in Bereitschaft geschaltet sind, wird das Bild des Teilnehmers A über die Kamera aufgenommen, mit Mitteln zum Komprimieren auf der PCMCIA-Karte komprimiert und über die Verbindung zu den Telekommunikationsnetz zu dem weiteren Teilnehmer B am Ort II übertragen. Die am Ort II des Teilnehmers B empfangenen Daten werden ebenfalls auf die PCMCIA-Karte gegeben, dort von Mitteln zum Dekomprimieren dekomprimiert und über den dort befindlichen Personal Computer, vielmehr auf dessen Display wiedergegeben. Gleichzeitig wird das Bild des Teilnehmers B von der dort befindlichen Kamera ebenfalls aufgezeichnet, mittels der dort befindlichen PCMCIA-Karte komprimiert und ebenfalls über das Netz wiederum zu dem Teilnehmer A gesendet wo diese von dort befindlichen Mitteln auf der PCMCIA-Karte ebenfalls dekomprimiert werden und auf dem dort befindlichen Display angezeigt werden. Auf dem Display kann ebenfalls das eigene Bild angezeigt werden.

Eine weitere Verwendungsmöglichkeit einer solchen Kamera ist zum Übertragen von Dokumenten, in Form einer Dokumentenkamera. Dokumente können somit von der Kamera aufgenommen werden und auf dem eben beschriebenen Weg zu einem weiteren Teilnehmer B übertragen.

Im folgenden wird anhand eines Ausführungsbeispiels (ohne Zeichnung) erläutert, wie eine erfindungsgemäße PCMCIA-Karte gemäß Patentanspruch 5 arbeitet.

Eine PCMCIA-Karte CC weist eine Schnittstelle zum Anschluß einer Video/Audio-Aufnahmevorrichtung CAM, beispielsweise eines Camcoders, auf.

Diese Schnittstelle kann auch so ausgebildet sein, daß ein Anschlußkabel fest integriert ist, also entsprechend immer nur eine Video/Audio Aufnahmevorrichtung angebracht werden muß. Die PCMCIA-Karte CC besitzt desweiteren eine Kommunikationsschnittstelle KOM-S zum Anschluß an ein Kommunikationsnetz ISDN, GSM. Über diese Schnittstelle werden Video/Audio-Signale gesendet und empfangen. Weiter sind auf der Karte Mittel zum Komprimieren und Senden von Video/Audio-Signalen. Hierbei sei auf die CCITT Recommendations H.221 und H.261 verwiesen, die angeben wie eine Komprimierung und Übertragung stattzufinden hat.

Entsprechend müssen auch Mittel zum Dekomprimieren der empfangenen Video/Audio-Signale auf der PCMCIA-Karte vorhanden sein.

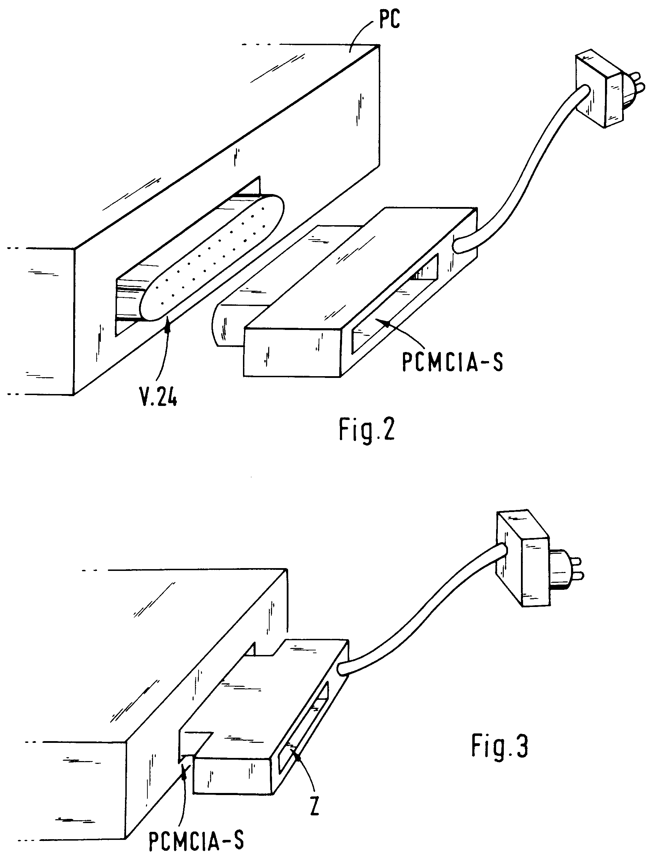

Im Folgenden wird anhand von Fig. 2 dargestellt wie eine erfindungsgemäße Videotelephoneinrichtung funktioniert, wenn nur eine Datenschnittstelle vorhanden ist. Diese Datenschnittstelle z. B. eine V.24 Schnittstelle oder eine Druckerschnittstelle ist an jedem bisher bekannten Datenverarbeitungsgerät vorhanden. In die im PC vorhandenen Datenschnittstelle wird ein Adapter zur Nachbildung einer PCMCIA-Schnittstelle eingeführt. Dieser kann wenn es bestimmte besondere Erfordernisse erfordern zusätzlich zu den Anschlußmöglichkeiten einer Video/Audio-Aufnahmevorrichtung und zusätzlich zu der Kommunikationsschnittstelle KOM-S einen Anschluß besitzen, der den Adapter mit einem Netzteil verbindet. Dieses dient dazu, für den Fall daß eine PCMCIA-Karte einen erhöhten Spannungsbedarf aufweist, zusätzlich Spannung unabhängig von dem PC zur Verfügung zu stellen. Dies ist insbesondere dann vorteilhaft, wenn es sich bei dem Datenverarbeitungsendgerät um ein Laptop oder PDA handelt.

Im Folgenden wird anhand von Fig. 3 ein weiteres Ausführungsbeispiel gemäß Anspruch 4 erläutert. Um den zuvor genannten Anforderungen zu genügen, nämlich wenn die Karte einen erhöhten Spannungsbedarf aufweist, gibt es zusätzlich zu der bisher beanspruchten Videotelephoneinrichtung eine Zwischeneinrichtung Z zum Einstecken in die PCMCIA-Schnittstelle PCMCIA-S und zum Aufnehmen der PCMCIA-Karte CC. Diese besitzt zusätzlich eine Verbindung zu einem Netzteil und kann somit einen erhöhten Strombedarf auffangen.

## Patentansprüche

1. Videotelephoneinrichtung, die
- eine Video/Audio-Aufnahmevorrichtung (CAM),
- eine Datenverarbeitungsvorrichtung (PC) mit einer Video/Audio-Wiedergabevorrichtung (D, L) und eine PCMCIA-Schnittstelle (PCMCIA-S) oder eine Datenschnittstelle und einen Adapter zur Nachbildung einer PCMCIA-Schnittstelle und
- eine PCMCIA-Karte (CC) mit einer Schnittstelle (CAM-S) zum Anschluß der Video/Audio-Aufnahmevorrichtung (CAM) und eine Kommunikationsschnittstelle (KOM-S) zum Anschluß an ein Kommunikationsnetz (ISDN, GSM)
enthält.

2. Videotelephoneinrichtung nach Anspruch 1,
bei der mittels der Kommunikationsschnittstelle (KOM-S) zum Anschluß an ein Kommunikationsnetz (ISDN, GSM) eine drahtgebundene Verbindung zu einem ISDN-Netz oder zu einem breitbandigen digitalen Netz hergestellt wird.

3. Videotelephoneinrichtung nach Anspruch 1,
bei der mittels der Kommunikationsschnittstelle (KOM-S) zum Anschluß an ein Kommunikationsnetz (ISDN, GSM) eine drahtlose Verbindung zu einem Mobilfunknetz hergestellt wird.

4. Videotelephoneinrichtung nach Anspruch 1,
mit einer Zwischeneinrichtung (Z) zum Einstecken in die PCMCIA-Schnittstelle (PCMCIA-S) und zum Aufnehmen der PCMCIA-Karte (CC), die einen Anschluß zur Bereitstellung einer zusätzliche Spannungsversorgung der PCMCIA-Karte.

5. PCMCIA-Karte (CC) mit einer Schnittstelle (CAM-S) zum Anschluß einer Video/Audio-Aufnahmevorrichtung (CAM) und mit einer Kommunikationsschnittstelle (KOM-S) zum Anschluß an ein Kommunikationsnetz (ISDN, GSM), bei der über die Kommunikationsschnittstelle (KOM-S) Video/Audio-Signale gesendet und empfangen werden, und bei der Mittel zum Komprimieren und Senden von solchen Video/Audio-Signale vorgesehen sind, die von einer Video/Audio-Aufnahmevorrichtung (CAM) aufgenommene werden und bei der Mittel zum Empfangen und Dekomprimieren von solchen Video/Audio-Signalen vorgesehen sind, die über die Kommunikationsschnittstelle (KOM-S) empfangen werden.
